Europäisches Patentamt

(19) **European Patent Office**

**Office européen des brevets**

(11) Numéro de publication: **0 116 484**
**B1**

## FASCICULE DE BREVET EUROPÉEN

(45) Date de publication du fascicule du brevet: 16.03.88

(51) Int. Cl.⁴: **A 23 K 1/08**, A 23 K 1/16, A 23 K 1/175 // A23K1/18

(21) Numéro de dépôt: 84400018.2

(22) Date de dépôt: 05.01.84

(54) Composition réhydratante pour le traitement de jeunes animaux ne pouvant plus digérer normalement le lait.

(30) Priorité: 12.01.83 FR 8300390

(43) Date de publication de la demande: 22.08.84 Bulletin 84/34

(45) Mention de la délivrance du brevet: 16.03.88 Bulletin 88/11

(84) Etats contractants désignés: BE CH DE GB IT LI NL

(56) Documents cité:
FR-A-2 141 423
FR-A-2 328 410
GB-A-1 568 874
NL-A-7 807 127
US-A-1 445 434
US-A-4 178 370
US-A-4 382 966

(73) Titulaire: **INSTITUT NATIONAL DE LA RECHERCHE AGRONOMIQUE (INRA)**, 145, Rue de l'Université, F-75341 Paris Cedex 07 (FR)

(72) Inventeur: **Remesy, Christian**, 11 rue Pablo Picasso, F-63000 Clermont-ferrand (FR)
Inventeur: **Demigne, Christian**, 9 rue A. Varennes, F-63110 Beaumont (FR)

(74) Mandataire: **Martin, Jean-Jacques**, Cabinet REGIMBEAU 26, Avenue Kléber, F-75116 Paris (FR)

EP 0 116 484 B1

# 0 116 484

**Description**

La présente invention concerne une composition réhydratante pour traitement des jeunes animaux, en particulier de jeunes ruminants et des porcelets, ne pouvant plus digérer normalement le lait. L'action réhydratante (stimulation de l'absorption d'eau et de sodium par divers composés) peut être exercée par de nombreuses compositions, y compris, à la limite, le lait (bien que celui-ci soit relativement pauvre en sodium). Les réhydratants synthétiques sont des compositions simplifiées où l'effet réhydratant maximal est recherché, aux dépens de la valeur énergétique. Entre les deux extrêmes -réhydratants synthétiques et diverses formes de laits- peuvent exister des compositions originales présentant un effet réhydratant et également nutritif, par l'apport de nutriments facilement digestibles chez les animaux qui ne peuvent plus digérer correctement le lait.

Il est bien connu que la suppression de l'alimentation lactée ou du moins sa forte réduction, chez ie jeune animal, spécialement le jeume ruminant ou le porcelet, peut être nécessaire au cours de diverses perturbations digestives, qu'elles soient dues à des diarrhées ou à des états de stress divers.

Dans l'exemple du veau, il est nécessaire de supprimer ou du moins de réduire fortement l'alimentation lactée au cours des diarrhées postnatales, que ces diarrhées soient d'origine bactérienne ou virale. Dans le cas des diarrhées plâtreuses apparaissant chez les veaux plus âgés, il est évident que le veau n'est plus en mesure de digérer correctement le lait qu'il reçoit habituellement; cet état se manifeste par l'émission de fèces à consistance anormale, ainsi que par des stéatorrhées. En ce qui concerne les stress liés au transport et à l'allotement, la digestion du lait peut être affectée par des perturbations de la vidange de la caillette.

L'administration de lait à des animaux présentant des troubles digestifs tels que des diarrhées et en cours de déshydratation pose plusieurs problèmes:

- en cas de perturbations de la vidange de la caillette, l'administration de lait tend à aggraver la situation et peut conduire à un blocage pratiquement total qui compromet tout traitement ultérieur par voie orale.

- même si les processus de formation du coagulum s'effectuent de façon pratiquement normale, la durée des processus d'hydrolyse ultérieure aboutit à limiter les quantités de liquide ingérées, et la vitesse de la réhydratation. En cas de diarrhées, les quantités d'eau et de minéraux consommées peuvent être notablement inférieures aux pertes au niveau intestinal.

- en cas de forte diarrhée, il existe un risque de perturbations de la dégradation dans la lumière intestinale des molécules plus complexes telles que les protéines et les lipides.

- l'état métabolique des animaux déshydratés (anoxie, acidose, hyperurémie, glucocorticoides élevés) est peu favorable à l'utilisation rapide par l'organisme de fortes quantités d'acides aminés et de lipides.

- la composition minérale du lait est favorable à un anabolisme actif, du fait de sa richesse en phosphore, en calcium et en potassium. Si la richesse en potassium est un élément favorable en cas de déshydratation avec pertes de cations intracellulaires, la pauvreté du lait en sodium et en chlorure, qui sont perdus en très fortes quantités au cours des diarrhées, rend cet aliment très inadapté aux besoins des animaux en état de déshydratation. Il faut en effet rappeler que l'absorption de sodium stimule très fortement celle de l'eau.

L'ensemble des différents facteurs énumérés ci-dessus fait que les animaux en état de déshydratation présentent une intolérance plus ou moins marquée au lait. En réalité, ces animaux sont à la fois en état de déshydratation, en état de déficit en minéraux, spécialement en $Na^+$, $K^+$ et $Cl^-$, et en état de déficit énergétique.

On a déjà proposé différentes formules par voie orale, ou réhydratants, pour corriger les troubles de la déshydratation et les pertes minérales en priorité. Toutefois, l'apport énergétique de ces formules est extrêmement limité. En effet, cet apport se fait généralement sous forme de glucose et acides organiques, plus quelques acides aminés tels que la glycine, qui présente du reste l'inconvénient d'être mal utilisée chez les animaux en déficit énergétique.

L'inconvénient majeur de ces réhydratants est que l'apport d'énergie est limité par des problèmes de pression osmotique en raison du respect de l'isotonicité. En outre, avec de fortes concentrations intraluminales en glucose, une large part de l'absorption du glucose se fait par des processus de diffusion qui sont indépendants du cotransport avec le sodium.

Certaines compositions à base de glucose sont décrites dans le brevet FR-A-2 467 599.

L'utilisation du lactose a rarement été préconisée pour l'alimentation d'animaux diarrhéiques en raison de l'opinion largement répandue selon laquelle la lactase, située près de la surface des entérocytes, disparaissait au cours des diarrhées.

Le lactose est mentionné dans certaines compositions à des titres divers, EP-A-0 090 356 et FR-A-2 587 655.

Or, le Demandeur a maintenant constaté que, contre toute attente, le lactose pouvait être utilisé dans la préparation de compositions réhydratantes convenablement complémentées en vue de l'alimentation de jeunes animaux pouvant présenter des problèmes de digestion du lait.

L'invention concerne donc une composition réhydratante pour le traitement des jeunes ruminants ou des porcelets qui ne peuvent plus digérer normalement le lait et qui sont sujets à des diarrhées, caractérisée en ce qu'elle contient par litre de composition liquide:
- un complément comportant:
. 30 à 100 mmoles/l de sodium
. 5 à 40 mmoles/l de potassium
. 20 à 60 mmoles/l de chlorure
. 0 à 50 mmoles/l d'acétate

2

. 0 à 50 mmoles/l de propionate
. 1 à 5 mmoles/l de magnésium,
et
- un produit choisi parmi le lactose, le lactosérum doux ou acide ou du lactosérum hydrolysé par de la lactase
. à raison de 20 à 50 g/l de lactosérum doux déshydraté ou une quantité équivalente de lactosérum non concentré ou concentré, ou
. à raison de 15 à 50 g/l de lactose et le complément comporte alors, en outre, du phosphate (entre 5 et 15 mmoles/l), du calcium et la plupart des électrolytes contenus en très faible quantité dans le lactosérum.

L'utilisation du lactose, comme élément principal dans les compositions réhydratantes de l'invention, présente de nombreux avantages par rapport à celle du glucose. Les principaux avantages à signaler sont: une pression osmotique deux fois plus faible à poids égal, une hydrolyse sur un site très voisin du système de cotransport Na+-glucose ou Na+-galactose, un apport en glucide plus équilibré (glucose + galactose) et une réaction de Maillard éventuelle très inférieure à celle avec le glucose. Il faut également noter que la fraction glucidique (lactose) est hydrolysée au contact immédiat des cellules intestinales par la lactase.

Il est préférable, notamment pour des raisons économiques, d'utiliser le lactose sous forme de lactosérum. En dehors de ces raisons économiques il faut noter que le lactosérum est très intéressant puisqu'il est en fait débarrassé des nutriments dont la digestion peut poser des problèmes, à savoir la caséine et les lipides. De plus, le lactosérum renferme des quantités modérées de protéines, notamment de lactoglobulines, dont l'effet peut être favorable.

Il est tout spécialement avantageux d'utiliser du lactosérum doux, c'est-à-dire obtenu après action de la présure; ce lactosérum doux assure un apport minéral très proche de celui du lait, excepté un appauvrissement en calcium et en phosphore. Il faut toutefois éviter du lactosérum doux salé utilisé dans la fabrication de certains fromages.

On peut également utiliser du lactosérum acide, c'est-à-dire obtenu par traitement du lait avec l'acide lactique. Dans ce cas l'acide lactique doit être partiellement neutralisé par de la soude jusqu'à un pH voisin de 6.

Le complément utilisé dans les compositions de l'invention est destiné à rééquilibrer ce lactosérum, notamment par des sels de sodium (acétate, propionate, chlorure).

Les anions organiques tels que le propionate et l'acétate sont intéressants à plusieurs titres:
- Ils peuvent favoriser la vidange de la caillette.
- Le propionate, en particulier, possède une action bactériostatique en solutions relativement concentrées, et, à doses moyennes (30 mM), un effet favorable sur la flore digestive par élévation du rapport lactobacilles/colibacilles.
- Ces anions organiques peuvent augmenter l'absorption du sodium, et par conséquent celle de l'eau, à tous les niveaux du tube digestif. En effet, ces anions sont absorbés dans l'intestin grêle proximal, dans l'intestin grêle distal (iléon) et dans le gros intestin, alors que l'ion chlorure est absorbé essentiellement dans l'intestin grêle distal. De plus, le lieu normal de leur production et de leur absorption est le gros intestin. Il en résulte par conséquent une sécurité plus importante dans la réhydratation.
- La métabolisation de l'acétate et du propionate est rapide et permet de lutter contre l'acidose métabolique. En effet, l'acétate est métabolisé en $CO_2$ et il se forme alors, à partir de l'acétate de sodium, du bicarbonate de sodium qui constitue une substance tampon physiologique du sang. Le propionate étant glucoformateur, le glucose produit est ensuite métabolisé notamment en $CO_2$, et on retrouve donc les mêmes effets que dans le cas de l'acétate.

On peut également préparer les compositions réhydratantes de l'invention en utilisant du lactose au lieu de lactosérum. On peut alors aboutir à des eliments de formule proche d'un lactosérum complémenté en préparant un complément (anions et cations) aboutissant à une formule voisine de celle d'un lactosérum complémenté, à l'exception de la fraction azotée et lipidique qui subsiste dans ce produit.

Le complément devra alors comporter, outre les cations et anions prévus dans le cas du lactosérum, du phosphate (de 5 à 15 mmoles/l), du calcium et la plupart des électrolytes contenus en très faible quantité dans le lactosérum.

Le produit à base de lactose peut encore être constitué par du lactose ou du lactosérum hydrolysé par de la lactase.

Les compositions de l'invention peuvent comporter en outre d'autres additifs.

On peut ainsi ajouter un sel d'acide carboxylique en $C_4$ à $C_8$, en particulier un octanoate qui est utile comme conservateur en raison de ses propriétés bactériostatiques.

On peut aussi améliorer la protection immunitaire locale vis à vis des agents pathogènes en ajoutant aux compositions de l'invention dés lactoglobulines, obtenues par filtration du lactosérum, à raison par exemple d'environ 5 g/l.

D'autre part, on peut élever la concentration énergétique des compositions de l'invention en y ajoutant des triglycérides d'acides gras courts ou moyens, à raison par exemple d'environ 15 g/l; de même, en ce qui concerne les veaux soumis aux stress d'allotement, on peut substituer une partie du lactosérum (1/3 maximum) par de la poudre de lait écrémé ou rajouter ce produit (10 à 30 g/l).

On peut aussi ajouter aux compositions à base de lactose ou de lactosérum un hexose tel que le glucose, le galactose ou le sorbitol, en quantité de 10 à 20 g/l.

La préparation de compositions réhydratantes à partir du lactose au lieu de lactosérum est certainement plus coûteuse et fait aussi perdre l'avantage de l'apport de certaines vitamines et oligoéléments propres au lactosérum. En revanche, les compositions à base de lactose, surtout dans le cas où on y ajoute du glucose, ont l'avantage de réduire au maximum le risque de réaction de Maillard entre glucides et acides aminés.

Les compositions à base de lactosérum peuvent être préparées à partir de lactosérum déshydraté (doux ou acide), de lactosérum non concentré ou de lactosérum concentré.

Les compositions comprendront entre 20 et 50 g/l de lactosérum doux déshydraté, ou une quantité équivalente de lactosérum non concentré ou concentré à condition que ces derniers présentent les mêmes qualités technologiques que le lactosérum déshydraté.

Les compositions à base de lactosérum, seront avantageusement préparées en solution puis séchées au moyen d'un appareillage approprié, par exemple au moyen d'une tour de séchage, de manière à obtenir un produit sec pouvant être conditionné en sachets. La solution pourra être préparée par dissolution des différents additifs dans le lactosérum liquide ou par dissolution des différents additifs et du lactosérum déshydraté dans de l'eau. Si la composition doit comporter des triglycérides, ceux-ci seront ajoutés avant séchage.

Dans le cas où les compositions sont préparées à partir de lactose, ce dernier sera présent à raison de 15 à 50 g/l, avec, comme indiqué précédemment, un complément permettant d'aboutir à la composition en électrolytes du lactosérum complémenté, du moins en ce qui concerne les macroéléments et les principaux anions.

Les compositions à base de lactose seront préparées directement sous forme sèche en utilisant de préférence des sels déshydratés puis conditionnés en sachets.

Comme indiqué précédemment, les compositions de l'invention peuvent également renfermer un hexose. La présence d'un hexose est tout particulièrement souhaitée, lorsque les teneurs en lactosérum des compositions sont inférieures à 35 g/l et lorsque les teneurs en lactose des compositions sont inférieures à 25 g/l.

Les compositions ainsi définies apporteront, par litre de composition liquide:

| | | |
|---|---|---|
| sodium | 30 à | 100 mmoles/l |
| potassium | 5 à | 40 mmoles/l |
| chlorure | 20 à | 60 mmoles/l |
| acétate | 0 à | 50 mmoles/l |
| propionate | 0 à | 50 mmoles/l |
| magnésium | 1 à | 5 mmoles/l |
| glucose | 0 à | 100 mmoles/l |
| galactose | 0 à | 100 mmoles/l |
| sorbitol | 0 à | 100 mmoles/l |
| calcium | 5 à | 15 mmoles/l |
| phosphate | 5 à | 15 mmoles/l |

Les compositions réhydratantes ainsi obtenues sont destinées au traitement des jeunes animaux, en particulier des jeunes ruminants ou des porcelets, pouvant présenter des problèmes de digestion de lait consécutifs à des atteintes diarrhéiques ou à des stress divers. Ces compositions sont utilisables par voie orale et peuvent se présenter sous forme de compositions pour boire, téter ou sonder. Les compositions réhydratantes de l'invention peuvent ainsi être utilisées dans diverses situations, parmi lesquelles il faut citer en particulier les diarrhées avec déshydratation, les diarrhées plâtreuses, et les situations de stress.

En ce qui concerne les diarrhées avec déshydratation, les compositions trouvent une utilisation dans les cas suivants:

(a) déshydratation faible (inférieure à 5 %) ou début de déshydratation: il faut alors supprimer l'alimentation lactée et utiliser une composition réhydratante selon l'invention (par exemple passage au lactosérum complémenté)

(b) déshydratation forte: il faut soit intervenir d'abord par voie intraveineuse avec des réhydratants connus puis distribuer une composition selon l'invention, soit utiliser des réhydratants entièrement synthétiques constitués par du glucose, des acides aminés et des acides organiques.

Il faut remarquer que les solutés utilisés par voie intraveineuse sont généralement très défficients en potassium; et il est donc indispensable, dès que l'animal est à nouveau capable de s'alimenter, de lui administrer un aliment liquide riche en potassium.

Dans le cas des diarrhées plâtreuses, celles-ci s'accompagnent fréquemment de stéatorrhées alors que la déshydratation est peu marquée. L'utilisation d'une composition selon l'invention à base de lactosérum est particulièrement adaptée, en raison de sa très bonne tolérance et de son faible taux lipidique.

En ce qui concerne les situations de stress (transport, allotement), l'utilisation d'une composition selon l'invention est particulièrement adaptée. Il s'agit en effet d'un aliment liquide très assimilable, dont la digestion est peu affectée par un éventuel disfonctionnement de la caillette ou de la sécrétion biliaire ou pancréatique.

Il faut aussi souligner que les compositions de l'invention favorisent la transition au régime lacté, alors que les réhydratants synthétiques, qui ne contiennent pas de lactose, peuvent rendre critique le passage au lait.

On donnera maintenant deux exemples de compositions selon l'invention, l'une étant destinée à un aliment relativement pauvre en lactosérum (30 g/l) et l'autre à un aliment riche en lactosérum (50 g/l).

| Complément | Aliment à 30g/l lactosérum | Aliment à 50 g/l lactosérum |
|---|---|---|
| Na Cl | 25 mM | 15 mM |
| K Cl | 8 mM | 6 mM |
| Mg $Cl_2$ | 1 mM | 1 mM |
| Na CH COO | 30 mM | 0 mM |
| Na $CH_3CH_2$ COO | 10 mM | 30 mM |

composition totale: (mmoles / l)

| | Aliment pauvre en lactosérum (30 g/l) | | Aliment riche en lactosérum (50 g/l) | |
|---|---|---|---|---|
| | apport | lactosérum total | apport | lactosérum total |
| Na | 10,5 mM | 75,5 mM | 17,5 mM | 62,5 mM |
| K | 19,5 mM | 27,5 mM | 24,0 mM | 30,0 mM |
| Ca | 4,5 mM | 4,5 mM | 7,5 mM | 7,5 mM |
| Mg | 0,3 mM | 1,3 mM | 0,5 mM | 1,5 mM |
| $PO_4$ | 5,5 mM | 12,0 mM | 8,2 mM | 15,0 mM |
| Cl | 16,5 mM | 51,5 mM | 20,5 mM | 44,0 mM |
| $AGV_{(+)}$ | < 1 mM | 40 mM | < 2 mM | 30,0 mM |

(x) AGV désigne les acides gras volatils (acétate et propionate).

Des essais préliminaires ont été effectués sur des animaux en utilisant les deux exemples de composition indiqués précédemment.

L'aliment pauvre en lactosérum a été distribué à des veaux âgés de quelques jours et atteints de diarrhées infectieuses, tandis que l'aliment riche en lactosérum a été distribué à des veaux atteints de diarrhées plâtreuses. Les résultats ont été les suivants:

- veaux atteints de diarrhée liquide:

22 guérisons / 22 cas, nécessité d'une perfusion par voie intraveineuse dans 1 cas; (doses distribuées par voie orale, 3 fois, 1,5 litre par pour),

- veaux atteints de diarrhée très liquide:

15 guérisons / 18 cas, recours à la perfusion intraveineuse dans 7 cas.

Il faut également noter que les praticiens qui ont testé les compositions ont fréquemment administré des antibiotiques, en particulier de la colistine.

- veaux atteints de diarrhées plâtreuses:

46 guérisons / 50 cas, sur lesquels 19 étaient très sévèrement atteints (dose offerte, 2 litres 2 à 3 fois par jour).

Il apparraît donc que les compositions de l'invention peuvent être utilisées avec succès dans les cas de diarrhées infectieuses, où les résultats sont voisins de ceux obtenus avec un réhydratant par voie orale, et dans le cas de diarrhées plâtreuses où les résultats montrent un progrès significatif par rapport aux résultats obtenus jusqu'à présent.

En ce qui concerne l'utilisation des présentes compositions chez les veaux soumis aux stress de transport ou d'allotement, il est souhaitable de distribuer aux animaux au minimun 3 litres par jour d'une composition contenant des quantités modérées de lactosérum (teneur de l'ordre de 30 g/l). Pour ce qui concerne la prévention des troubles accompagnant le stress d'allotement, les quantités à distribuer sont de 2 fois environ 3 litres par jour d'une formule plus énergétique, c'est-à-dire plus riche en lactosérum (teneur de l'ordre de 50 g/l).

Chez le porcelet, on peut rencontrer deux types de diarrhées: des diarrhées infectieuses peu après la naissance, et des diarrhées de sevrage chez les animaux plus âgés.

En ce qui concerne les diarrhées infectieuses postnatales, il est possible de réhydrater les animaux par des solutés administrés par voie intrapéritonéale ou sous cutanée, ou de traiter les animaux par voie orale ou par tubage gastrique avec les produits de la présente invention.

En ce qui concerne les diarrhées de sevrage, il existe également plusieurs possibilités. On peut remplacer une partie de l'eau de boisson disponible par la composition de la présente invention, ou on peut distribuer aux animaux un granulé comprenant de 30 à 50 % des compositions de la présente invention mélangés à de la farine de mais, des tourteaux (de soja essentiellement) et des issus de céréales (sons).

**0 116 484**

**Revendications**

1. Composition réhydratante pour le traitement des jeunes ruminants ou des porcelets qui ne peuvent plus digérer normalement le lait et qui sont sujets à des diarrhées, caractérisée en ce qu'elle contient par litre de composition liquide:
- un complément comportant:
. 30 à 100 mmoles/l de sodium
. 5 à 40 mmoles/l de potassium
. 20 à 60 mmoles/l de chlorure
. 0 à 50 mmoles/l d'acétate
. 0 à 50 mmoles/l de propionate
. 1 à 5 mmoles/l de magnesium,
et
- un produit choisi parmi le lactose, le lactosérum doux ou acide ou du lactosérum hydrolysé par de la lactase
. à raison de 20 à 50 g/l de lactosérum doux déshydraté ou une quantité équivalente de lactosérum non concentré, ou concentré, ou
. à raison de 15 à 50 g/l de lactose et le complément comporte alors, en outre, du phosphate (entre 5 et 15 mmoles/l), du calcium et la plupart des électrolytes contenus en très faible quantité dans le lactosérum.

2. Composition selon la revendication 1, caractérisée par le fait que le complément comporte du chlorure de sodium, de l'acétate de sodium, du propionate de sodium, du chlorure de potassium et/ou du chlorure de magnésium.

3. Composition selon la revendication 1, caractérisée par le fait que le complément comporte, en outre, de 10 à 20 g/l d'un hexose tel que du glucose, du galactose ou du sorbitol, lorsque la teneur en lactosérum est inférieure à 35 g/l.

4. Composition selon l'une des revendications 1 à 3, caractérisée par le fait qu'elle peut être préparée en solution aqueuse puis séchée.

5. Composition selon la revendication 1, caractérisée par le fait que le complément comporte, en outre, de 10 à 20 g/l d'un hexose tel que du glucose, du galactose ou du sorbitol, lorsque la teneur en lactose est inférieure à 25 g/l.

6. Composition selon l'une des revendications 1 à 5, caractérisée par le fait que le complément comprend, en outre, l'un au moins des additifs suivants: un sel d'acide carboxylique en $C_4$ à $C_8$, en particulier un octanoate, des lactoglobulines et de petites quantités de poudre de lait écrémé (10 à 30 g/l) uniquement en ce qui concerne les animaux en cours d'allotement, et des triglycérides d'acides gras courts ou moyens.

7) Composition selon l'une des revendications 1 a 6, caractérisée par le fait qu'elle est utilisable par voie orale.


**Patentansprüche**

1. Rehydratisierbare Zusammensetzung zur Behandlung junger Wiederkäuer und Ferkel, die die Milch nicht mehr normal verdauen können und die an Diarrhoe leiden, dadurch gekennzeichnet, daß sie pro Liter flüssiger Zusammensetzung enthält:
- einen Zusatz, beinhaltendend:
30 bis 100 mMol/l Natrium
5 bis 40 mMol/l Kalium
20 bis 60 mMol/l Chlorid
0 bis 50 mMol/l Acetat
0 bis 50 mMol/l Propionat
1 bis 5 mMol/l Magnesium
und
- ein Produkt, gewählt aus Lactose, süßes oder saures Milchserum oder mittels Lactase hydrolysiertes Milchserum
in einer Menge von 20 bis 50 g/l dehydratisiertes, süßes Milchserum oder einer dem nicht konzentrierten oder konzentrierten Milchserum äquivalenten Menge oder
in einer Menge von 15 bis 50 g/l Lactose und wobei der Zusatz dann weiterhin Phosphat (zwischen 5 und 15 mMol/l), Calcium und den Großteil der Elektrolyten, die in sehr geringer Menge im Milchserum enthalten sind, beinhaltet.

2. Zusammensetzung nach Anspruch 1, dadurch gekennzeichnet, daß der Zusatz Natriumchlorid, Natriumacetat, Natriumpropionat, Kaliumchlorid und/oder Magnesiumchlorid beinhaltet.

3. Zusammensetzung nach Anspruch 1, dadurch gekennzeichnet, daß der Zusatz weiterhin 10 bis 20 g/l einer Hexose, wie etwa Glucose, Galactose oder Sorbit beinhaltet, wenn der Gehalt an Milchserum weniger als 35 g/l beträgt.

4. Zusammensetzung nach einem der Ansprüche 1 bis 3, dadurch gekennzeichnet, daß sie aus einer wäßrigen Lösung, die anschließend getrocknet wird, herstellbar ist.

6

5. Zusammensetzung nach Anspruch 1, dadurch gekennzeichnet, daß der Zusatz weiterhin 10 bis 20 g/l einer Hexose, wie etwa Glucose, Galactose oder Sorbit, beinhaltet, wenn der Gehalt an Lactose weniger als 25 g/l beträgt.

6. Zusammensetzung nach einem der Ansprüche 1 bis 5, dadurch gekennzeichnet, daß der Zusatz weiterhin wenigstens eines der nachfolgenden Additive umfaßt: ein Salz einer $C_4$ bis $C_8$-Carbonsäure, insbesondere ein Octanoat, Lactoglobuline und lediglich im Falle der Verteilung der Tiere, kleine Mengen Magermilchpulver (10 bis 30 g/l),
und Triglyceride kurzer oder mittlerer Fettsäuren.

7. Zusammensetzung nach einem der Ansprüche 1 bis 6, dadurch gekennzeichnet, daß sie auf oralem Wege verabreichbar ist.

## Claims

1. A rehydrating composition for treatment of young ruminants or piglets which can no longer digest milk normally and are subject to diarrhoea, the composition being charactarised in that it contains the following per litre of liquid composition:
- a supplement comprising:
. 30 to 100 mmoles/l sodium
. 5 to 40 mmoles/l potassium
. 20 to 60 mmoles/l chloride
. 0 to 50 mmoles/l acetate
. 0 to 50 mmoles/l propionate
. 1 to 5 mmoles/l magnesium,
and
- a product chosen from among lactose, sweet or acid lactoserum or lactoserum hydrolyzed by lactase
. in the proportion of 20 to 50 g/l dehydrated sweet lactoserum or an equivalent quantity of non-concentrated or concentrated lactoserum, or
. in the proportion of 15 to 50 g/l lactose and in that case the supplement also comprises phosphate (between 5 and 15 mmoles/l), calcium and most of the electrolytes present in very small quantities in lactoserum.

2. A composition according to claim 1, characterised in that the supplement comprises sodium chloride, sodium acetate, sodium propionate, potassium chloride and/or magnesium chloride.

3. A composition according to claim 1, characterised in that the supplement also comprises 10 to 20 g/l of a hexose such as glucose, galactose or sorbitol, when the lactoserum content is below 35 g/l.

4. A composition according to any of claims 1 to 3, characterised in that it can be prepared in aqueous solution and then dried.

5. A composition according to claim 1, characterised in that the supplement also comprises 10 to 20 g/l of a hexose such as glucose, galactose or sorbitol, when the lactose content is below 25 g/l.

6. A composition according to any one of claims 1 to 5, characterised in that the supplement also comprises at least one of the following additives: a $C_4$ to $C_8$ carboxylic acid salt, more particularly an octanoate, lactoglobulins and small quantities of powdered skimmed milk (10 to 30 g/l) only in the case or animals during grouping, and triglycerides of short or medium fatty acids.

7. A composition according to any of claims 1 to 6, characterised in that it is usable orally.